(19) Europäisches Patentamt

European Patent Office

Office européen des brevets

(11) **EP 0 555 855 B1**

(12) **EUROPÄISCHE PATENTSCHRIFT**

(45) Veröffentlichungstag und Bekanntmachung des Hinweises auf die Patenterteilung:
**05.06.1996 Patentblatt 1996/23**

(51) Int. Cl.$^6$: **B65H 23/02**, G05B 19/416

(21) Anmeldenummer: **93102164.6**

(22) Anmeldetag: **11.02.1993**

(54) **Verfahren zum Positionieren eines Fühlers für eine Bahnlaufregeleinrichtung**

Method for positioning a sensor of a web run control installation

Méthode pour positionner un capteur d'une installation pour régler la course d'une bande

(84) Benannte Vertragsstaaten:
**AT BE CH DE DK ES FR GB IT LI NL SE**

(30) Priorität: **11.02.1992 DE 4203979**

(43) Veröffentlichungstag der Anmeldung:
**18.08.1993 Patentblatt 1993/33**

(73) Patentinhaber: **BST SERVO-TECHNIK GmbH
D-33507 Bielefeld (DE)**

(72) Erfinder:
• **Schrauwen, Hans Joachim
W-4901 Hiddenhausen 5 (DE)**
• **Nacke, Theodor
W-4817 Leopoldshöhe (DE)**
• **Bettführ, Jürgen, Dipl.-Ing.
W-4973 Vlotho (DE)**

(74) Vertreter: **Klingseisen, Franz, Dipl.-Ing. et al
Patentanwälte,
Dr. F. Zumstein,
Dipl.-Ing. F. Klingseisen,
Bräuhausstrasse 4
D-80331 München (DE)**

(56) Entgegenhaltungen:
**EP-A- 0 243 756**

• **PATENT ABSTRACTS OF JAPAN vol. 10, no. 8 (E-373)(2065) 14. Januar 1986 & JP-A-60 170 495 ( TAITETSUKU K.K. ) 3. September 1985**

# Beschreibung

Die Erfindung betrifft ein Verfahren zum Positionieren eines Fühlers nach dem Oberbegriff des Anspruchs 1.

Ein Verfahren dieser Art ist aus EP-A 0 243 756 bekannt, wobei die Verlagerung des Nullpunktes eines Kantenfühlers von der Mitte des Fühlers weg durch Signale beschrieben wird, die von einem Druckmarkenfühler abgegeben werden, der gegenüber den Kantenfühlern Priorität hat.

Wenn bei einer solchen Bahnlaufregeleinrichtung, bei der mittels eines die Bahnkante berührungsfrei erfassenden optischen Fühlers, der Bahnlauf geregelt wird, wird beim Positionieren des Fühlers auf die Bahnkante dieser von einem Fühlerverstellgerät von außen auf die Bahnkante zubewegt, worauf der Fühler an seinem Arbeitspunkt angehalten werden soll, der in der Regel der mit der Bahnkante ausgerichteten Mitte des Fühlers entspricht. Da beim Verstellen des Fühlers mittels des Fühlerverstellgerätes zwangsläufig ab Stoppbefehl ein gewisser Nachlauf auftritt, ist es schwierig, den Fühler genau zu positionieren. Der Nachlauf hängt von der Stellgeschwindigkeit des Fühlerverstellgerätes, die bspw. 1 mm/sec. bis 30 mm/sec. betragen kann, und vom Meßbereich des betreffenden Fühlers ab, der zwischen 2 mm bis z. B. 40 mm betragen kann. Bei einer ungünstigen Kombination dieser Faktoren ist eine genaue Fühlereinstellung sehr zeitaufwendig.

Der Erfindung liegt die Aufgabe zugrunde, ein Verfahren der eingangs angegebenen Art so auszubilden, daß die Fühlerpositionierung schnell und exakt ausgeführt werden kann.

Diese Aufgabe wird erfindungsgemäß durch die Merkmale im kennzeichnenden Teil des Anspruchs 1 gelöst. Damit wird der zwangsläufig bei einem Fühlerverstellgerät auftretende Nachlauf des Fühlers festgestellt und für die exakte Positionierung ausgenützt. Der Suchvorgang wird zunächst mit einer vorgegebenen relativ frühen Stoppschwelle gestoppt. Der Fühler bewegt sich dann ab Stoppbefehl durch den Nachlauf weiter auf die Bahnkante zu, worauf in der erreichten Endstellung die Fühlerposition durch das Fühlersignal und die elektronische Steuereinrichtung festgestellt wird. Der Fühler wird dann um einen bestimmten Betrag noch von der vorgesehenen Endposition entfernt sein. Durch Differenzbildung zwischen Stoppschwelle und tatsächlich erreichter Endstellung wird der Nachlauf ermittelt und der Nachlaufbetrag als korrigierte Stoppschwelle verwendet. Mit dieser korrigierten Stoppschwelle wird der Suchvorgang wiederholt. Da der Nachlauf sich nicht verändert, erfolgt nunmehr ein Stop des Fühlers sehr nahe am vorgegebenen Arbeitspunkt des Fühlers. Auf diese Weise kann automatisch sehr schnell eine genaue Positionierung des Fühlers durchgeführt werden.

Die Erfindung wird beispielsweise anhand der Zeichnung näher erläutert.

Fig. 1     erläutert in einer schematischen Darstellung einen ersten Schritt des Kantensuchvorganges,

Fig. 2     einen darauf folgenden zweiten Schritt, und

Fig. 3     schematisch eine Anordnung von Fühlern beiderseits einer Materialbahn.

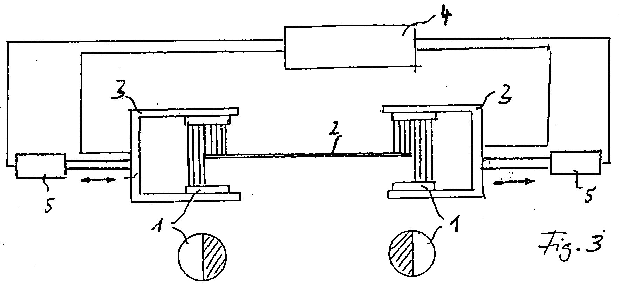

Fig. 3 zeigt schematisch kreisrunde optische Fühler 1 in einer U-förmigen, von einem Fühlerverstellgerät 5 verstellbaren Halterung 3 beiderseits einer Materialbahn 2, wobei in dieser Darstellung die Bahnkanten die Fühler 1 jeweils zur Hälfte abdecken. Bei 4 ist schematisch eine elektronische Signalverarbeitungs- und Steuereinrichtung dargestellt, welche die Fühlersignale aufnimmt und verarbeitet. Ferner werden durch diese Steuereinrichtung 4 die Fühlerverstellgeräte 5 zum Verstellen der Fühler 1 gesteuert.

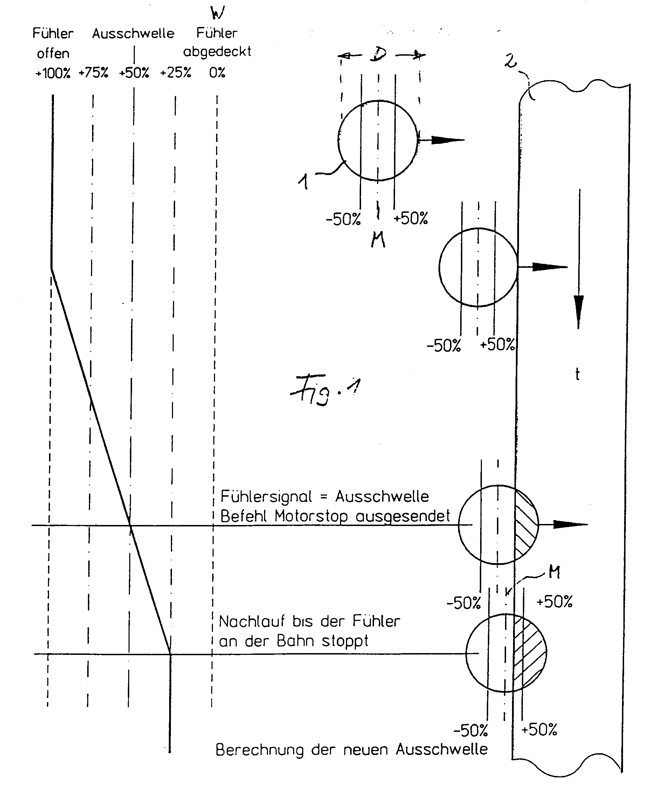

Fig. 1 zeigt schematisch einen kreisrunden optischen Fühler 1, dessen Meßbereich dem Durchmesser D entspricht. Dieser Fühler 1 wird durch ein Fühlerverstellgerät 5, beispielsweise eine motorgetriebene Gewindespindel oder dgl., beim Kantensuchvorgang in Pfeilrichtung auf eine Materialbahn 2 zubewegt, deren Lauf durch eine nicht dargestellte Bahnlaufregeleinrichtung geregelt werden soll. Das Fühlerverstellgerät 5 wird durch die elektronische Steuereinrichtung 4 gesteuert, welche die vom Fühler 1 abgegebenen Signalwerte aufnimmt und für die Regelung sowie den Kantensuchvorgang verarbeitet.

Auf der linken Seite in Fig. 1 ist das vom Fühler 1 abgegebene Signal in Abhängigkeit von dem Überdeckungsgrad zwischen Fühler und Materialbahn über der Zeit t aufgetragen. Der mit 100 % wiedergegebene Signalwert entspricht dem völlig freiliegenden Fühler in der dargestellten ersten und zweiten Stellung außerhalb der Materialbahn 2, wobei in der zweiten Stellung der Fühler 1 mit seinem Umfang gerade die Kante der Materialbahn 2 erreicht hat. Bei der weiteren Fühlerbewegung auf die Materialbahn 2 zu wird der Fühler teilweise von der Materialbahn abgedeckt, wie dies in der dritten Stellung durch den schraffierten Bereich wiedergegeben ist. Entsprechend verringert sich der Signalwert auf der linken Seite in Fig. 1, wobei 0 % jenen Wert wiedergibt, der einem von der Bahn 2 zur Hälfte abgedecktem Fühler 1 entspricht.

Es wird davon ausgegangen, daß für die exakte Positionierung des Fühlers dessen Mitte M mit der Bahnkante ausgerichtet werden soll, so daß die Fühlermitte M den Arbeits- oder Führungspunkt W des Fühlers für die Bahnlaufregelung darstellt. In entsprechender Weise ist auf der linken Seite in Fig. 1 die Fühlermitte mit 0 % bezeichnet, wobei die Strecke zwischen 0 und 100 % dem halben Durchmesser D des Fühlers entspricht.

In der elektronischen Steuereinrichtung, in deren Speicher der Arbeitspunkt W = D/2 gespeichert ist, auf den die Bahnlaufregelung abgestellt ist, wird bei 50 % des Fühlerradius eine erste Stoppschwelle vorgegeben, wonach das Fühlerverstellgerät einen Stoppbefehl erhält, sobald der Fühler über den halben Radius von der Bahn 2 abgedeckt wird, wie dies in der dritten Position in Fig. 1 wiedergegeben ist, in der die Bahnkante mit der Stoppschwelle 50 % übereinstimmt. Das vom Fühler 1 abgegebene Signal in dieser Stellung löst den Befehl Motorstop für das Fühlerverstellgerät aus.

Aufgrund des Nachlaufs des Fühlerverstellgerätes bewegt sich der Fühler trotz Motorstopbefehl weiter auf die Bahn 2 zu, bis er beispielsweise in der in Fig. 1 unten wiedergegebenen Stellung zum Stillstand kommt, in der die Bahn 75 % der Fühlerhälfte abdeckt, die Bahnkante also noch 25 % des Fühlerradius von der Fühlermitte M entfernt ist. Dieser festgestellte Stoppwert von 25 % wird als neue Stoppschwelle in der elektronischen Steuereinrichtung festgelegt bzw. wird die ursprünglich vorgegebene Stoppschwelle von 50 % durch die neue Stoppschwelle 25 % ersetzt (50 - 25 = 25 %).

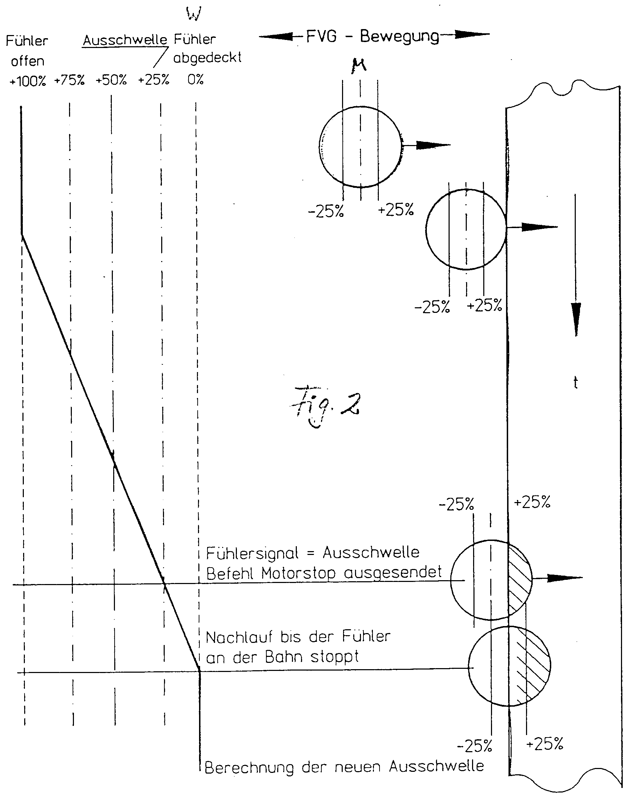

Hierauf wird der Fühler 1 von der Materialbahn 2 zurückgefahren, worauf mit der neuen Stoppschwelle von 25 % ein erneuter Kantensuchvorgang durch die Steuereinrichtung ausgelöst wird, der in Fig. 2 wiedergegeben ist.

Mit der neuen Stoppschwelle bei 25 % wird in Fig. 2 der Fühler 1 wiederum auf die Bahn 2 zubewegt, worauf bei einem Fühlersignal von 25 % der Befehl Motorstop ausgelöst wird, wenn die Bahnkante mit der Stoppschwelle 25 % am Fühler fluchtet. Der Nachlauf des Fühlers ist in der Regel der gleiche wie bei dem ersten Kantensuchvorgang nach Fig. 1, wobei davon ausgegangen wird, daß die Verstellgeschwindigkeit des Fühlers 1 beim ersten und zweiten Kantensuchvorgang gleich ist. Dementsprechend liegt bei dem zweiten Kantensuchvorgang nach Fig. 2 der Fühler mittels seines Nachlaufs sehr nahe an der vorgesehenen Endposition, in der die Fühlermitte mit der Bahnkante fluchtet, der Fühler also zur Hälfte von der Bahn abgedeckt wird.

Erreicht die Fühlermitte bei der ersten Stoppschwelle von 50 % mit Nachlauf nur eine Endposition von bspw. 30 % des Fühlerradius, so wird als neue Stoppschwelle für den zweiten Kantensuchvorgang 50 - 30 % = 20 % festgelegt.

Beiderseits der Fühlermitte M wird ein Toleranzfenster von z. B. 5 %, also insgesamt 10 % vorgesehen. Erreicht der Fühler beim Kantensuchvorgang mit diesem Toleranzfenster die Bahnkante, so daß diese innerhalb des Toleranzfensters liegt, so wird der Kantensuchvorgang beendet.

Wenn bei dem zweiten Kantensuchvorgang nach Fig. 2 das Toleranzfenster des Fühlers noch nicht auf die Bahnkante zu liegen kommen sollte und die Fühlermitte z. B. noch 10 % des Fühlerradius von der Bahnkante entfernt liegt, so wird eine weitere Stoppschwelle bei 25 - 10 % = 15 % bzw. 20 - 10 % = 10 % festgelegt, und mit dieser korrigierten Stoppschwelle ein erneuter Kantensuchvorgang ausgeführt.

Um einen durch das Toleranzfenster auftretenden Restfehler bei der Fühlerpositionierung zu kompensieren, wenn die Fühlermitte z. B. innerhalb des Toleranzfensters neben der Bahnkante liegt, wird der zuletzt erhaltene Signalwert des Fühlers, der beispielsweise um 3 % von dem Arbeitspunkt W = 0 % abweicht, in der elektronischen Steuereinrichtung als neuer Arbeitspunkt W' festgelegt bzw. auf Soll gesetzt, so daß die Bahnlaufregelung mit den vorgegebenen Parametern weiterarbeiten kann. Es wird somit nicht der Fühler über den letzten Restbetrag auf die Bahnkante ausgerichtet, sondern der beim Kantensuchvorgang zuletzt erreichte Arbeits- bzw. Führungspunkt W' an die Stelle des Führungspunktes W gesetzt. Die Regelung arbeitet dann mit einem Führungspunkt W' = 3 % anstelle von W = 0 %.

Neben dem vorgegebenen Toleranzfenster kann ein Restfehler bei der Fühlerpositionierung auch dann auftreten, wenn Schrittmotoren bzw. Synchronmotoren für das Fühlerverstellgerät verwendet werden, die nicht an jedem beliebigen Punkt gestoppt werden können. So kann ein Stop des Motors z. B. nur in bestimmten Abständen von 0,3 mm möglich sein. Auch in diesem Fall wird der zuletzt erhaltene Führungspunkt W' für die Regelung auf Soll gesetzt und nicht der ursprüngliche Führungswert W. Eine Fühlerpositionierung auf z. B. 1/10 Genauigkeit wäre mechanisch nur mit großem Aufwand zu erreichen, während in der elektronischen Steuereinrichtung der Führungspunkt W' einer ungenauen Fühlerposition sehr exakt auf Soll bzw. W = 0 gesetzt werden kann. Hierdurch wird eine hohe Genauigkeit des Suchvorganges erreicht, die größer ist, als die durch einen Motorstop in Abständen von 0,3 mm vorgegebene.

Vorzugsweise wird beiderseits der Fühlermitte M eine Stoppschwelle vorgegeben, wie in Fig. 1 und 2 wiedergegeben, so daß der Kantensuchvorgang von innerhalb und außerhalb der Bahnkante gestartet werden kann.

Das beschriebene Verfahren der Fühlerpositionierung kann auch bei anderen Steuer- bzw. Regeleinrichtungen als bei einer Bahnlaufregelung eingesetzt werden. Ebenso können auf diese Art auch andere als optische Fühler schnell und genau positioniert werden, bspw. pneumatische oder induktive Fühler.

Das beschriebene Verfahren zum Positionieren eines Fühlers wird automatisch bei jedem Kantensuchvorgang ausgeführt, so daß bei jedem neuen Suchvorgang der Fühlernachlauf kompensiert wird.

**Patentansprüche**

1. Verfahren zum Positionieren eines Fühlers, insbesondere für eine Bahnlaufregeleinrichtung, wobei der Fühler durch ein Fühlerverstellgerät auf eine Bahnkante zu und von dieser wegbewegt und in einer erwünschten Endstellung durch eine das Fühlerverstellgerät steuernde elektronische Steuereinrichtung positioniert wird, in der die Fühlersignale verarbeitet werden,
**dadurch gekennzeichnet,**
daß durch die Steuereinrichtung im Fühlermeßbereich eine Stoppstellung für die Fühlerbewegung vorgegeben wird, die in einem Abstand vor der erwünschten Endstellung des Fühlers liegt und bei deren Erreichen durch den Fühler die Steuereinrichtung einen Stoppbefehl an das Fühlerverstellgerät abgibt, worauf sich der Fühler durch Nachlauf weiter auf die erwünschte Endstellung zubewegt, daß durch den Fühler die nach dem Nachlauf erreichte Endstellung abgetastet und mit der vorgegebenen Stopp-Stellung verglichen wird, und daß entsprechend dem so ermittelten Abstand zwischen tatsächlich erreichter Endstellung und vorgegebener Stoppstellung eine neue Stoppstellung vor der erwünschten Endstellung in der Steuereinrichtung festgelegt wird, worauf der Kantensuchvorgang mit dieser korrigierten Stoppstellung wiederholt wird.

2. Verfahren nach Anspruch 1,
dadurch gekennzeichnet,
daß am Arbeitspunkt (W) der Regelung ein Toleranzfenster in der elektronischen Steuereinrichtung vorgegeben wird, wobei ein Signal zur Beendigung des Kantensuchvorganges abgegeben wird, wenn die Bahnkante in das Toleranzfenster zu liegen kommt.

3. Verfahren nach Anspruch 2,
dadurch gekennzeichnet,
daß ein Restfehler der Fühlerpositionierung, der sich durch Lage der Bahnkante innerhalb des Toleranzfensters gegenüber dem Arbeitspunkt ergibt, dadurch kompensiert wird, daß der der erreichten Endstellung entsprechende Signalwert des Fühlers als neuer Führungs- bzw. Arbeitspunkt (W) in der Steuereinrichtung für die weitere Bahnlaufregelung festgelegt wird.

## Claims

1. Method for positioning a sensor, especially for a web control apparatus, wherein the sensor is moved by a sensor adjustment device towards an edge of the web and away from said edge and is positioned in a desired final position by an electronic control means controlling the sensor adjustment device, in which the sensor signals are processed,
**characterized in that**
by the control means in the sensor measuring range a stopping position for the sensor movement is predetermined, which is at a distance before the desired final position of the sensor and that the control means gives a stopping command to the sensor adjustment device, when the sensor reaches said stopping position, whereupon the sensor moves by successive motion further towards the desired final position,
that by the sensor the resting position reached after the successive motion is detected and is compared to the predetermined stopping position, and that according to the distance thus detected between the in fact reached resting position and the predetermined stopping position a new stopping position is fixed before the desired final position in the control means, whereupon the edge scanning process is repeated with this corrected stopping position.

2. Method according to claim 1,
characterized in that
on the working point (W) of the control element a tolerance window is provided in the electronic control means, wherein a signal for finishing the edge scanning process is emitted, when the edge of the web has been positioned into the tolerance window.

3. Method according to claim 2,
characterized in that
a still possible error of the sensor positioning, which results by the position of the edge of the web within the tolerance window in relation to the working point, is compensated by the fact that the signal value of the sensor corresponding to the reached final position is determined as a new guiding point or operation point (W) in the control means for the further web control.

## Revendications

1. Procédé pour le positionnement d'un capteur, en particulier pour une installation de régulation de bande, le capteur étant agité par un dispositif de réglage de capteur vers un bord de bande et parti de cette bande et etant positionné à une position finale désirée par une installation de commande electronique commandant le dispositif de réglage de capteur, dans laquelle les signaux de capteur sont procedés,
**caractérisé en ce que**
par l'installation de commande dans la zone de mésure une position d'arrêt pour le mouvement de capteur est predeterminée, qui est à une distance avant la position finale désirée du capteur et que l'installation de commande emit une commande d'arrêt au dispositif de réglage de capteur, lorsque la position d'arrêt est gagnée par le capteur, apres quoi le capteur mouve par mouvement successive plus à la direction de la position finale desirée, que par le capteur la position de repos gagnée apres le mouvement successive est touchée et comparée à la position d'arrêt predeterminée, et que selon la distance découverte ainsi entre la position de repos gagnêe réalement et la position d'arrêt predeterminée une position d'arrêt nouvelle est determinée avant la position finale desirée dans l'installation de commande, apres quoi le process de chercher le bord est repété avec ce position d'àrrêt déplacée.

2. Procédé selon la revendication 1,
caractérisé en ce que
au point de travail (W) de la régulation une fenêtre de tolerance est fournée dans l'installation de commande electronique, un signal pour finir l'operation de chercher le bord est emis, lorsque le bord de bande est posé dans la fenêtre de tolerance.

3. Procédé selon la revendication 2, caracterisée en ce que un erreur encore possible du positionnement de capteur, qui resulte par la position du bord de bande dans la fenêtre de tolerance en relation du point de travail, est compensée par ce que la valeur de signal du capteur correspandante à la position finale est determinée comme point de guide ou point de travail nouveau (W) dans l'installation de commande pour l'autre regulation de bande.

Fig. 1

W

Fühler        Ausschwelle Fühler                    ◄─── FVG – Bewegung ───►
offen                        abgedeckt

+100%   +75%   +50%   +25%    0%                     M

                                                    −25%      +25%

                                                         −25%   +25%

Fig. 2

                                                                              t

                                                   −25%        +25%

Fühlersignal = Ausschwelle
Befehl Motorstop ausgesendet

Nachlauf bis der Fühler
an der Bahn stoppt

                                                   −25%        +25%

Berechnung der neuen Ausschwelle

Fig. 3